# EUROPÄISCHE PATENTSCHRIFT

(11) **EP 1 144 511 B1**
(45) Veröffentlichungstag und Bekanntmachung des Hinweises auf die Patenterteilung: **08.08.2007**
(21) Anmeldenummer: 99969966.3
(22) Anmeldetag: 04.11.1999
(51) Int. Cl.: C08L 69/00, C08K 5/523

(54) **FLAMMWIDRIGE POLYCARBONAT-ABS-FORMMASSEN**
FLAME-RESISTANT POLYCARBONATE ABS MOULDING MATERIAL
MATIERES MOULABLES ININFLAMMABLES CONSTITUEES DE POLYCARBONATE ET D'ABS

(30) Priorität: 18.11.1998 DE 19853105
(43) Veröffentlichungstag der Anmeldung: 17.10.2001
(73) Patentinhaber: Bayer MaterialScience AG, 51368 Leverkusen (DE)
(72) Erfinder: ECKEL, Thomas, D-41540 Dormagen (DE); ZOBEL, Michael, D-40547 Düsseldorf (DE); KELLER, Bernd, D-47608 Geldern (DE); WITTMAN, Dieter, D-51375 Leverkusen (DE)
(86) Internationale Anmeldenummer: PCT/EP1999/008411
(87) Internationale Veröffentlichungsnummer: WO 2000/031173

(56) Entgegenhaltungen:
- EP-A- 0 933 396
- WO-A-99/07778
- WO-A-99/07791
- PATENT ABSTRACTS OF JAPAN vol. 2000, no. 02, 29. Februar 2000 (2000-02-29) & JP 11 302523 A (QIMEI IND CO LTD), 2. November 1999 (1999-11-02)
- DATABASE WPI Section Ch, Week 199719 Derwent Publications Ltd., London, GB; Class A18, AN 1997-209482 XP002139568 & JP 09 059464 A (TORAY IND INC), 4. März 1997 (1997-03-04)

## Beschreibung

Die vorliegende Erfindung betrifft mit Phosphorverbindungen flammwidrig ausgerüstete Polycarbonat-ABS-Formmassen, die ein ausgezeichnetes mechanisches Eigenschaftsniveau, insbesondere eine deutlich verbesserte Reißdehnung, einen herausragenden Zug-E-Modul sowie ein ausgezeichnetes Verarbeitungsverhalten aufweisen.

In EP-A-0 363 608 werden Polymermischungen aus aromatischem Polycarbonat, styrolhaltigem Copolymer oder Pfropfcopolymer sowie oligomeren Phosphaten als Flammschutzadditive beschrieben. Für bestimmte Einsatzzwecke ist das mechanische Eigenschaftsniveau und das Verarbeitungsverhalten dieser Mischungen oft nicht ausreichend.

In der EP-A-0 704 488 werden Formmassen aus aromatischem Polycarbonat, styrolhaltigen Copolymerisaten und Pfropfpolymerisaten mit einer speziellen Pfropfbasis in bestimmten Mengenverhältnissen beschrieben. Diese Formmassen weisen eine sehr gute Kerbschlagzähigkeit auf und können gegebenenfalls mit Phosphorverbindungen flammwidrig ausgerüstet werden. Für die Herstellung von Formkörpern mit erhöhter Elastizitätsbeanspruchung und dem geforderten Verarbeitungsverhalten ist das Eigenschaftsniveau nicht ausreichend.

US-P 5 061 745 beschreibt Formmassen aus aromatischem Polycarbonat, Pfropfpolymerisat und Monophosphaten. Die Flüchtigkeit der Monophosphate kann zu starken Beeinträchtigungen des Verarbeitungsverhaltens führen.

EP-A 755 977 beschreibt Formmassen aus aromatischem Polycarbonat, ABS-Pfropf polymeren mit einem Kautschukgehalt <25 % und oligomeren Phosphaten. Um ein gutes Spannungsrißverhalten zu erhalten, dürfen die Phosphat-Gehalte 8 Gew.-% nicht überschreiten. Ferner wird ausgeführt, daß Masse-ABS und Mischungen aus hochkautschukhaltigen Pfropfpolymer und SAN-Harz ähnliche mechanische und rheologische Eigenschaften haben. Zum Erreichen eines ausreichenden Flammschutzes kann die eingesetzte Flammschutzmittelmenge von max. 8 Gew.-% zu gering sein.

Aufgabe der vorliegenden Erfindung ist es, flammwidrige Polycarbonat-ABS-Formmassen bereitzustellen, die ausgezeichnete mechanische Eigenschaften wie Bindenahtfestigkeit und Reißdehnung mit einem ausgezeichneten Verarbeitungsverhalten (wenig Oberflächenstörungen, Fließfähigkeit, geringe Anteile flüchtiger Komponenten) verbunden. Dieses Eigenschaftsniveau entspricht dem Trend nach immer dünneren und damit leichteren Gehäuseteilen.

Es wurde nun gefunden, daß PC/ABS-Formmassen, die Phosphorverbindungen gemäß Komponente D (s.u.) und ein Pfropfpolymerisat, welches über Massepolymerisation erhältlich ist, enthalten, zu Formkörper mit einem sehr guten mechanischen Eigenschaftsniveau verarbeitet werden können.

Gegenstand der vorliegenden Erfindung sind daher flammwidrige thermoplastische Formmassen auf Basis Polycarbonat und/oder Polyestercarbonat enthaltend mittels Masse-, Lösungs- oder Masse-Suspensions-Polymerisationsverfahren hergestelltes Pfropfpolymerisat und Phosphor enthaltende Verbindungen als Flammschutzmittel. Als Phosphor enthaltende Verbindungen werden die unten als Komponente D genannten Phosphorverbindungen der allgemeinen Formel (I) eingesetzt.

Gegenstand der vorliegenden Erfindung sind vorzugsweise flammwidrige thermoplastische Formmassen bestehend aus
A. 40 bis 99, vorzugsweise 60 bis 98,5 Gew.-Teile aromatisches Polycarbonat und/oder Polyestercarbonat,
B. 0,5 bis 60, vorzugsweise 1 bis 40, insbesondere 2 bis 25 Gew.-Teile mittels Masse-, Lösungs- oder Masse-Suspensions-Polymerisationsverfahren hergestelltes Pfropfpolymerisat von
B.1 50 bis 99, vorzugsweise 65 bis 98 Gew.% eines oder mehrerer Vinylmonomeren auf
B.2 50 bis 1, vorzugsweise 35 bis 2 Gew.-% einer oder mehrerer Pfropfgrundlagen mit einer Glasumwandlungstemperatur <10°C, vorzugsweise <0°C, besonders bevorzugt < -10°C,
C. 0 bis 45, vorzugsweise 0 bis 30, besonders bevorzugt 2 bis 25 Gew.-Teile thermoplastisches Vinyl(co)polymerisat und/oder Polyalkylenterephthalat
D. 0,5 bis 20 Gew.-Teile, vorzugsweise 1 bis 18 Gew.-Teile, besonders bevorzugt 2 bis 17 Gew.-Teile, Phosphorverbindung der allgemeinen Formel (I) 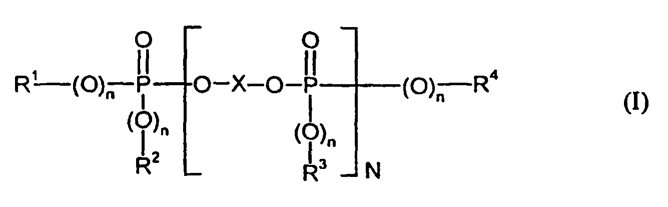 worin
   - R¹, R², R³ und R⁴,: unabhängig voneinander jeweils gegebenenfalls halogeniertes C₁-bis C₈-Alkyl, jeweils gegebenenfalls durch Alkyl, vorzugsweise C₁-C₄-Alkyl, und/oder Halogen, vorzugsweise Chlor, Brom, substituiertes C₅- bis C₆-Cycloalkyl, C₆- bis C₂₀-Aryl oder C₇- bis C₁₂-Aralkyl,
   - n: unabhängig voneinander, 0 oder 1
   - N: 0 bis 30 und
   - X: einen ein- oder mehrkernigen aromatischen Rest mit 6 bis 30 C-Atomen bedeuten,
E. 0,05 bis 5 Gew.-Teile fluoriertes Polyolefin in einer Form ausgewählt aus der Gruppe der
   E.1 koagulierten Mischung enthaltend phenolische Antioxidantien aus einem Pfropfpolymerisat B und Tetrafluorethylenpolymerisat und
   E.2 pulverförmigen _ Tetrafluorethylenpolymerisate mit einem mittleren Teilchendurchmesser von 100 bis 1000 µm,
F. mindestens ein Additiv ausgewählt aus der Gruppe der Gleit- und Entformungsmittel, Nukleiermittel, Antistatika, Stabilisatoren, Farbstoffe und Pigmente, Fließhilfsmittel, feinstteilige anorganische Pulver mit einem mittleren Teilchendurchmesser von kleiner gleich 200 nm und Flammschutzmittel, und
G. gegebenenfalls ein im Emulsionsverfahren hergestelltes Pfropfpolymerisat.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II) 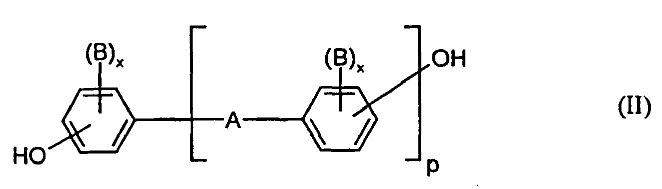 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 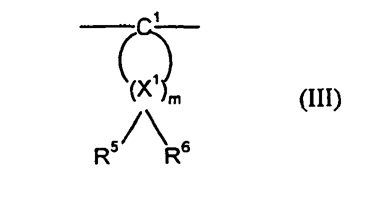 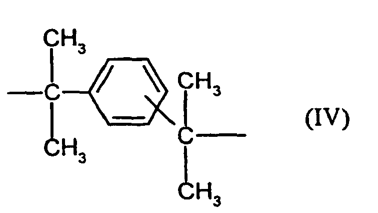
- B: jeweils Wasserstoff, C₁-C₁₂-Alkyl, vorzugsweise Methyl, Halogen, vorzugsweise Chlor und/oder Brom,
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, daß an mindestens einen Atom X¹, R⁵ und R⁶ gleichzeitig Alkyl sind.

Bevorzugte Diphenole sind Hydrochinon, Resocin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielseise US-Patent 3 419 634) bzw. nach literaturbekannten Verfahren herstellbar. Die Herstellung Polydiorganosiloxan-haltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und der aromatischen Polyestercarbonate liegt im Bereich 1,18 bis 1,4, vorzugsweise 1,22 bis 1,3 (gemessen an Lösungen von 0,5 g Polycarbonat bzw. Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Das kautschukmodifizierte Pfropfpolymerisat B umfaßt ein statistisches (Co)polymerisat aus Monomeren gemäß B.1.1 und/oder B.1.2, sowie einem mit dem statistischen (Co)polymerisat aus B.1.1 und/oder B.1.2 gepfropften Kautschuk B.2, wobei die Herstellung von B in bekannter Weise nach einem Masse- oder Lösungs- oder Masse-Suspensions-Polymerisationsverfahren erfolgt, wie z.B. in den US-3 243 481, US-3 509 237, US-3 660 535, US-4 221 833 und US-4 239 863 beschrieben.

Beispiele für Monomere B.1.1 sind Styrol, α-Methylstyrol, halogen- oder alkylkernsubstituierte Styrole wie p-Methylstyrol, p-Chlorstyrol, (Meth)acrylsäure-C₁-C₈-alkylester wie Methylmethacrylat, n-Butylacrylat und t-Butylacrylat. Beispiele für Monomere B.1.2 sind ungesättigte Nitrile wie Acrylnitril, Methacrylnitril, (Meth)-Acrylsäure-C₁-C₈-alkylester wie Methylmethacrylat, n-Butylacrylat, t-Butylacrylat, Derivate (wie Anhydride und Imide) ungesättigter Carbonsäuren wie Maleinsäureanhydrid und N-Phenyl-maleinimid oder Mischungen davon.

Bevorzugte Monomere B.1.1 sind Styrol, α-Methylstyrol und/oder Methylmethacrylat, bevorzugte Monomere B.1.2 sind Acrylnitril, Maleinsäureanhydrid und/oder Methylmethacrylat.

Besonders bevorzugte Monomere sind B.1.1 Styrol und B.1.2 Acrylnitril.

Für die kautschukmodifizierten Pfropfpolymerisate B geeignete Kautschuke B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethyle/vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb 10°C, vorzugsweise unterhalb -10°C liegt. Besonders bevorzugt wird reiner Polybutadienkautschuk.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.%, vorzugsweise weniger als 2 Gew.-%, bezogen auf B.2, vernetzend wirkender ethylenisch ungesättigter Monomeren enthalten. Beispiele für solche vernetzend wirkenden Monomere sind Alkylendiol-di-(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das kautschukmodifizierte Pfropfpolymerisat B wird erhalten durch Pfropfpolymerisation von 50 bis 99, bevorzugt 65 bis 98, besonders bevorzugt 75 bis 95 Gew.-Teilen eines Gemischs aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 5 bis 25 Gew.-Teilen der Kautschukkomponente B.2, wobei die Pfropfpolymerisation nach einem Masse- oder Lösungs- oder Masse-Suspensions-Polymerisationsverfahren durchgeführt wird.

Wesentlich bei der Herstellung der kautschukmodifizierten Pfropfpolymerisate B ist, daß die Kautschukkomponente B.2 vor der Pfropfpolymerisation im Gemisch der Monomeren B.1.1 und/oder B.1.2 in gelöster Form vorliegt. Die Kautschukkomponentc B.2 darf also weder so stark vernetzt sein, daß eine Lösung in B.1.1 und/oder B.1.2 unmöglich wird, noch darf B.2 zu Beginn der Pfropfpolymerisation bereits in Form diskreter Teilchen vorliegen. Die für die Produkteigenschaften von B wichtige Teilchenmorphologie und zunehmende Vernetzung von B.2 bildet sich erst im Verlauf der Pfropfpolymerisation aus (siehe hierzu beispielsweise Ullmann, Encyclopädie der technischen Chemie, Band 19, S. 284 ff., 4. Auflage 1980).

Das statistische Copolymerisat aus B.1.1 und B.1.2 liegt üblicherweise im Polymerisat B zu einem Teil auf dem Kautschuk B.2 auf oder eingepfropft vor, wobei dieses Pfropfmischpolymerisat diskrete Teilchen im Polymerisat B ausbildet. Der Anteil des auf- oder eingepfropften Copolymerisats aus B.1.1 und B.1.2 am gesamten Copolymerisat aus B.1.1 und B.1.2 - also die Pfropfausbeute (= Gewichtsverhältnis der tatsächlich gepfropften Pfropfmonomeren zu den insgesamt verwendeten Pfropfmonomeren x 100, angegeben in %)- sollte dabei 2 bis 40 %, vorzugsweise 3 bis 30 %, besonders bevorzugt 4 bis 20 % betragen.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 µm, vorzugsweise von 0,8 bis 2,5 µm.

Neben der über Masse-Polymerisation hergestellten Pfropfpolymerisate können die erfindungsgemäßen Formmassen auch über Emulsionspolymerisation hergestelltes Pfropfpolymerisat enthalten. Die Beschreibung der Pfropfpolymerisate entspricht vorzugsweise derjenigen der über Massepolymerisation hergestellten, sind jedoch mittels Emulsionspolymerisation hergestellt.

Der mittlere Teilchendurchmesser (d₅₀-Wert) der Pfropfgrundlage im Emulsionspfropfpolymerisat beträgt im allgemeinen 0,05 bis 5 µm, vorzugsweise 0,10 bis 0,5 µm, besonders bevorzugt 0,20 bis 0,40 µm. Der Gelanteil der Pfropfgrundlage beträgt mindestens 30 Gew.-%, vorzugsweise mindestens 40 Gew.-%.

Das ABS-Pfropfpolymer ist besonders bevorzugtes "Emulsions-Pfropfpolymer".

Das Gewichtsverhältnis von mittels Massepolymerisation hergestelltes Pfropfpolymer gemäß Komponente B der vorliegenden Erfindung zu dem mittels Emulsionspolymerisation hergestellten Pfropfpolymer beträgt 100:0 bis 50:50, vorzugsweise 80:20 bis 60:40.

### Komponente C

Die Komponente C umfaßt ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kemsubstituierten Vinylaromaten wie beispielsweise Styrol, α-Methylstyrol, p-Methylstyrol, p-Chlorstyrol) und/oder Methacrylsäure-(C₁-C₈)-Alkylester wie z.B. Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte M̅_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Die Komponente D ist eine Phosphorverbindung der Formel (I)

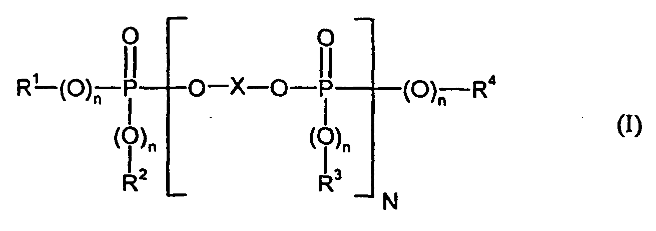

In der Formel haben R¹, R², R³ und R⁴, die oben angegebenen Bedeutungen. Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (I) bedeutet einen ein- oder mehrkernigen aromatischen Rest mit 6 bis 30 C-Atonnen. Dieser leitet sich von Diphenolen der Formel (II) ab. Bevorzugte Diphenole sind z.B. Diphenylphenol, Bisphenol A, Resorcin oder Hydrochinon oder deren chlorierten oder bromierten Derivaten.
- n: in der Formel (I) kann, unabhängig voneinander, 0 oder 1 sein, vorzugsweise ist n gleich 1.
- N: steht für Werte von 0 bis 30, vorzugsweise für einen durchschnittlichen Wert von 0,3 bis 20 , besonders bevorzugt 0,5 bis 10, insbesondere 0,5 bis 6.

Eine bevorzugte Phosphorverbindung sind ferner auch Verbindungen der Formel (Ia) 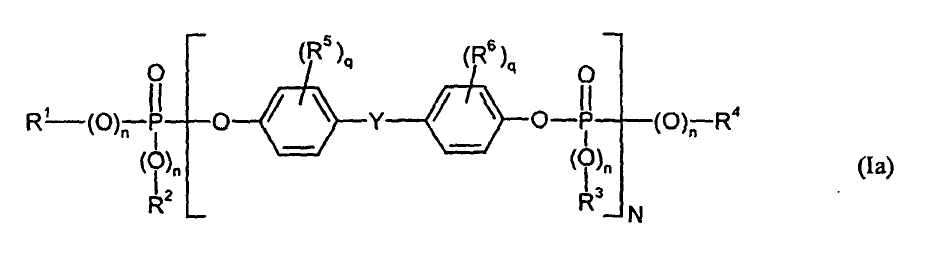 worin
- R¹, R², R³ und R⁴,: n und N die oben bei Formel (I) angegebenen Bedeutungen haben
- R⁵ und R⁶: unabhängig voneinander C₁-C₄-Alkyl, vorzugsweise Methyl, oder Halogen, vorzugsweise Chlor und/oder Brom, bedeuten,
- Y: C₁-C₇-Alkyliden, C₁-C₇-Alkylen, C₅-C₁₂-CYcloalkylen, C₅-C₁₂-Cycloalkyliden, -O-, -S-, -SO-, oder -CO- bedeutet, und
- q: 0, die Zahl 1 oder 2 bedeutet,
- Y: steht vorzugsweise für C₁-C₇-Aikyliden, insbesondere für Isopropyliden oder Methylen.

In der Formel (Ia) entspricht die Gruppe 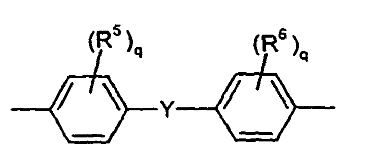 dem Rest X in Formel (I).

Als erfindungsgemäße Komponente D können Monophosphate (N=O), Oligophosphate (N=1-30) oder Mischungen aus Mono- und Oligophosphaten eingesetzt werden.

In den erfindungsgemäßen Formmassen liegt die Komponente D vorzugsweise als eine Mischung von 10 bis 90 Gew.%, vorzugsweise 12 bis 40 Gew.%, wenigstens einer Monophosphorverbindung der Formel (I) und 10 bis 90 Gew.%, vorzugsweise 60 bis 88 Gew.%, jeweils bezogen auf die Gesamtmenge der Phosphorverbindungen, wenigstens einer Oligophosphorverbindung der Formel (I) vor, wobei die Mischung ein durchschnittliches N von 0,3 bis 20, vorzugsweise 0,5 bis 10, besonders bevorzugt 0,5 bis 6, aufweist.

Monophosphorverbindungen der Formel (I) sind insbesondere Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Für bestimmte Anwendungen, besonders dann wenn erhöhte Anforderungen an die Flammfestigkeit gestellt werden, sind Gehalte an Phosphorverbindungen D von mehr als 8 Gew.-%, vorzugsweise von 8,5 bis 17 Gew.-Teile erforderlich.

Die Phosphorverbindungen gemäß Komponente D sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

### Komponente E

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine E eine Dichte von 1,2 bis 2,3 g/cm³. Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate. Die fluorierten Polyolefin sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate E mit Emulsionen der Pfropfpolymerisate B eingesetzt.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B und E wird zuerst eine wäßrige Emulsion (Latex) eines Pfropfpolymerisates B mit einer feinteiligen Emulsion eines Tetraethylenpolymerisates E vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gleichgewichtsverhältnis Pfropfpolymerisat B zum Tetrafluorethylenpolymerisat E bei 95:5 bis 60:40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handlsübliche Produkte und werden beispielsweise von der Firma DuPont als Teflon^{®} 30 N angeboten.

Die erfindungsgemäßen Formmassen können wenigstens eines der üblichen Additive, wie Gleit- und Entformungsmittel, Nukleiermittel, Antistatika, Stabilisatoren sowie Farbstoffe und Pigmente enthalten.

Die erfindungsgemäßen Formmassen können darüberhinaus noch feinstteilige, anorganische Pulver in einer Menge bis zu 50 Gew.-Teilen, vorzugsweise bis zu 20, insbesondere 0,5 bis 10 Gew.-Teilen, enthalten.

Feinstteilige anorganische Verbindungen bestehen aus Verbindungen eines oder mehrerer Metalle der 1. bis 5. Hauptgruppe oder 1. bis 8. Nebengruppe des Periodensystems, bevorzugt 2. bis 5. Hauptgruppe oder 4. bis 8. Nebengruppe, besonders bevorzugt 3. bis 5. Hauptgruppe oder 4. bis 8. Nebengruppe mit mindestens einem Element ausgewählt aus der Gruppe Sauerstoff, Schwefel, Bor, Phosphor, Kohlenstoff, Stickstoff, Wasserstoff und Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, TiO₂, SnO₂,WC, ZnO, Al₂O_{3,} AIO(OH), ZrO₂, Sb₂O₃, SiO₂, Eisenoxide, Na₂SO₄, BaSO₄, Vanadianoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Pfropfkautschuke mit Dispersionen, Suspensionen, Pasten oder Solen der feinstteiligen anorganischen Materialien dar.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat und Zinnoxid sowie Siloxanverbindungen genannt.

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperatuem von 200°C bis 300°C in üblichen Aggregaten wie Innenknetern, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammfestigkeit, ihrer sehr guten Verarbeitungseigenschaft und ihrer sehr guten mechanischen Eigenschaften, insbesondere ihrer herausragenden Steifigkeit, zur Herstellung von Formkörpern jeglicher Art, insbesondere solchen mit erhöhten Anforderungen an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:
1. Innenausbauteile für Schienenfahrzeuge
2. Radkappen
3. Gehäuse von Kleintransformatoren enthaltenden Elektrogeräten
4. Gehäuse für Geräte zur Informationsverbreitung und -Übermittlung
5. Gehäuse und Verkleidung für medizinische Zwecke
6. Massagegeräte und Gehäuse dafür
7. Spielfahrzeuge für Kinder
8. Flächige Wandelemente
9. Gehäuse für Sicherheitseinrichtungen
10. Heckspoiler
11. Wärmeisolierte Transportbehältnisse
12. Vorrichtung zur Haltung oder Versorgung von Kleintieren
13. Formteile für Sanitär- und Badeausrüstungen
14. Abdeckgitter für Lüfteröffnungen
15. Formteile für Garten- und Gerätehäuser
16. Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

### A.1

Lineares Polycarbonat auf Basis Bisphenol A mit einer relativen Lösungsviskosität von 1,272, gemessen in CH₂Cl₂ als Lösungsmittel bei 25°C und einer Konzentration von 0,5 g/100 ml.

### A.2

Lineares Polycarbonat auf Basis Bisphenol A mit einer relativen Lösungsviskosität von 1,202, gemessen in CH₂Cl₂ als Lösungsmittel bei 25°C und einer Konzentration von 0,5 g/100 ml.

### Komponente B

### B.1

Pfropfpolymerisat von 84 Gew.-Teilen eines Copolymerisats aus Styrol und Acrylnitril im Verhältnis von 73:27 auf 16 Gew.-Teile vernetzten Polybutadienkautschuk, hergestellt durch Massepolymerisation.

### B.2 (Vergleich)

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser d₅₀ = 0,28 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

D. 1 Triphenylphosphat (TPP) als Vergleich.
D.2 Mischung aus m-Phenylen-bis(di-phenyl-phosphat) (Fyrolflex^{®} RDP der Firma Akzo) und Triphenylphosphat (TPP) im Gewichtsverhältnis 3:1.
D.3 m-Phenylen-bis(di-phenyl-phosphat), Fyrolflex^{®} RDP der Firma Akzo.

### Komponente E

Tetrafluorethylenpolymerisat als koagulierte Mischung aus einer SAN-Pfropfpolymerisat-Emulsion gemäß o.g. Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von d₅₀ = 0,28 µm.

### Herstellung von E

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm³.

Die Bestimmung des Zug E-Moduls erfolgt nach DIN 53 457/ISO 527.

### Die Bestimmung der Reißdehnung erfolgt nach ISO 527

Zur Ermittlung der Bindenahtfestigkeit wird die Schlagzähigkeit nach DIN 53 453 an der Bindenaht von beidseitig ausgespritzten Prüfkörpern (Verarbeitungstemperatur 260°C) der Dimension 170 x 10 x 4 mm gemessen.

Der Gewichtsverlust wird durch thermogravimetrische Analyse (TGA) am Granulat bestimmt. Meßbedingungen: dynamisch, Heizrate 10K/min, N₂ als Inertgas. Der Wert bei 280°C wird als Maß für den Anteil flüchtiger Komponenten und die Verarbeitungsstabilität herangezogen.

Zur Bestimmung der Verarbeitungsstabilität werden außerdem Prüfkörper der Abmessung 80 x 10 x 4 mm³ bei 260C, 280°C und 300°C hergestellt. Die Verarbeitungsstabilität wird anhand der Oberflächenqualität beurteilt.

**Tabelle**

| **Zusammensetzung und Eigenschaften der Polycarbonat-ABS-Formmassen** | | | | | |
|---|---|---|---|---|---|
| **Beispiel** | **1** | **2 (Vergleich)** | **3** | **4 (Vergleich)** | **5** |
| **Komponenten** | | | | | |
| **[Gew.-Teile]** | | | | | |
| A.1 | 69,7 | 69,7 | 48,7 | 48,7 | 42,2 |
| A.2 | - | - | 29,8 | 29,8 | 26,2 |
| B.1 | 14,3 | - | 9,5 | - | 16,1 |
| B2 | - | 7,6 | - | 4,5 | - |
| C | - | 6,7 | - | 5,0 | - |
| D.1 | 11,3 | 11,3 | - | - | - |
| D.2 | - | - | 8,0 | 8,0 | - |
| D.3 | | | | | 10,8 |
| E | 4,2 | 4,2 | 3,6 | 3,6 | 4,2 |
| | | | | | |

| **Eigenschaften** | | | | | |
|---|---|---|---|---|---|
| Vicat B 120 [°C] | 92 | 91 | 109 | 107 | 98 |
| aₙ Bindenaht [kJ/m²] | 8,7 | 7,3 | 44,9 | 39,2 | 9,2 |
| MVR (240/5)/ISO 1133 | 19,3 | 15,7 | 19,6 | 19,4 | 24,2 |
| [cm³/10 min] | | | | | |
| UL 94 V 1,6mm | V-0 | V-0 | V-0 | V-0 | V-0 |
| Zug-E-Modul [N/mm³] | 2458 | 2319 | 2657 | 2635 | 2678 |
| Reißdehnung [%] | 87,5 | 55,2 | 90,5 | 43,9 | 83,4 |
| Gewichtsverlust | | | | | |
| TGA 280°C [%] | 3,5 | 4,1 | 0,9 | 1,2 | 0,4 |
| Verarbeitungs-Stabilität | | | | | |
| 260°C | + | + | + | + | + |
| 280°C | + | +/- | + | +/- | + |
| 300°C | + | - | + | - | + |

| | | | | | |
|---|---|---|---|---|---|
| Es bedeuten: + keine Oberflächenstörungen +/- geringe Oberflächenstörungen - starke Oberflächenstörungen | | | | | |

Die erfindungsgemäßen Beispiele 1, 3 und 5 zeigen deutliche Eigenschaftsverbesserungen bei mechanischen Eigenschaften wie Reißdehnung und Bindenahtfestigkeit, höhere E-Moduli und eine signifikant höhere Verarbeitungsstabilität, die sich in einem reduzierten Masse-Verlust bei 280°C (TGA) und weniger Oberflächenstörung auf den Probekörper zeigt. Besonders ausgewogene Eigenschaftskombinationen zeigen dabei die Polycarbonat-ABS-Formmassen, die sowohl Masse-ABS (Komponente B) als auch Emulsion-ABS (eingebracht über Komponente E) enthalten.

## Patentansprüche

1. Thermoplastische Formmassen bestehend aus
A. 40 bis 99 Gew.-Teile eines thermoplastischen Polycarbonats und/oder Polyestercarbonats
B. 0,5 bis 60 Gew.-Teile mittels Masse-, Lösungs- oder Masse-Suspensions-Polymerisationsverfahren hergestelltes Pfropfpolymerisat von
B.1 50 bis 99 Gew.-% einem oder mehreren Vinylmonomeren auf
B.2 50 bis 1 Gew.% einer oder mehrerer Pfropfgrundlagen mit einer Glasumwandlungstemperatur <10°C,
C. 0 bis 45 Gew.-Teile thermoplastisches Vinylcopolymerisat, und/oder Polyalkylenterephthalat,
D. 0,5 bis 20 Gew.-Teile einer Phosphorverbindung der Formel (I) 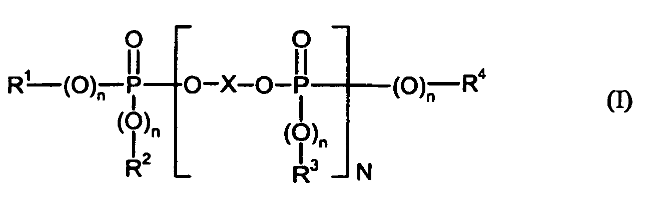 worin
R¹, R², R³ und R⁴, unabhängig voneinander jeweils gegebenenfalls halogeniertes C₁-bis C₈-Alkyl, jeweils gegebenenfalls durch Halogen und/oder Alkyl substituiertes C₅- bis C₆-Cycloalkyl, C₆- bis C₂₀-Aryl oder C₇- bis C₁₂-Aralkyl,
n unabhängig voneinander, 0 oder 1
N 0 bis 30 und
X einen ein- oder mehrkernigen aromatischen Rest mit 6 bis 30 C-Atomen bedeuten,
E. 0,05 bis 5 Gew.-Teile fluoriertes Polyolefin in einer Form ausgewählt aus der Gruppe der
E. 1 koagulierten Mischung enthaltend phenolische Antioxidantien aus einem Pfropfpolymerisat B und Tetrafluorethylenpolymerisat und
E.2 pulverförmigen Tetrafluorethylenpolymerisate mit einem mittleren Teilchendurchmesser von 100 bis 1000 µm,
F. mindestens ein Additiv ausgewählt aus der Gruppe der Gleit- und Entformungsmittel, Nukleienmittel, Antistatika, Stabilisatoren, Farbstoffe und Pigmente, Fließhilfsmittel, feinstteilige anorganische Pulver mit einem mittleren Teilchendurchmesser von kleiner gleich 200 nm und Flammschutzmittel, und
G. gegebenenfalls ein im Emulsionsverfahren hergestelltes Pfropfpolymerisat.

2. Formmassen nach Anspruch 1, welche 60 bis 98,5 Gew.-Teile aromatisches Polycarbonat und/oder Polyestercarbonat enthalten.

3. Formmassen nach Anspruch 1 und 2, welche 1 bis 40 Gew.-Teile der Komponente B und 0 bis 30 Gew.-Teile der Komponente C enthalten.

4. Formmassen nach Anspruch 1 bis 3, welche 1 bis 18 Gew.-Teile Phosphorverbindung gemäß Formel (I) enthalten.

5. Formmassen nach Anspruch 4, welche 8,5 bis 17 Gew.-Teile Phosphorverbindung gemäß Formel (I) enthalten.

6. Formmassen nach Anspruch 1, wobei der Kautschukgehalt der Komponente B 5 Gew.-% bis 25 Gew.-% beträgt.

7. Formmassen gemäß der vorhergehenden Ansprüche, wobei Vinylmonomere B.1 Gemische aus
B.1.1 Styrol, α-Methylstyrol, halogen- oder alkylkernsubstituierte Styrole und/oder (Meth)Acrylsäure-C₁-C₈-alkylester und
B.1.2 ungesättigte Nitrile, (Meth)Acrylsäure-C₁-C₈-alkylester und/oder Derivate ungesättigter Carbonsäuren darstellen.

8. Formmassen gemäß der vorhergehenden Ansprüche, wobei die Pfropfgrundlage B.2 ausgewählt ist aus mindestens einem Kautschuk aus der Gruppe der Dienkautschuke, EP(D)M-Kautschuke, Acrylat-, Polyurethan-, Silikon-, Chloropren- und Ethylen/Vinylacetat-Kautschuk.

9. Formmassen gemäß einem der vorhergehenden Ansprüche, welche als Komponente B Masse-Pfropfpolymerisate und Emulsions-Pfropfpolymerisate enthalten.

10. Formmassen nach einem der vorhergehenden Ansprüche, welche als Komponente D 10 bis 90 Gew.-%, wenigstens einer Monophosphatverbindung der Formel (I) und 90 bis 10 Gew.-%, (jeweils bezogen auf die Gesamtmenge der Phosphorverbindungen) wenigstens einer Oligophosphorverbindung der Formel (I) enthalten.

11. Formmassen nach einem der vorhergehenden Ansprüche, wobei in Formel (I) N einen durchschnittlichen Wert von 0,3 bis 20 aufweist.

12. Formmassen nach einem der vorhergehenden Ansprüche welche als Monophosphorverbindung der Formel (I) Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und/oder Trikresylphosphinoxid enthalten.

13. Formmassen gemäß einer der vorhergehenden Ansprüche, welche als Komponente D m-Phenylen-bis(diphenyl-phosphat) enthalten.

14. Formmassen gemäß eine der vorhergehenden Ansprüche, welche als Komponente D eine Phosphorverbindung der Formel (Ia) enthalten, 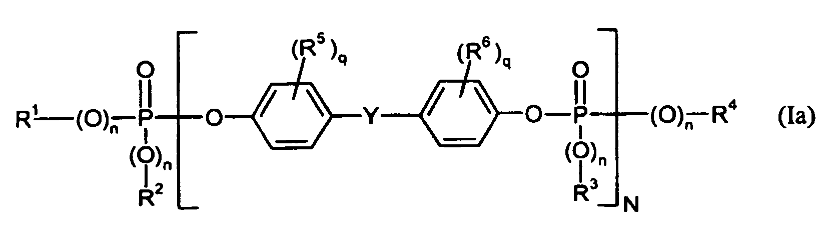 worin
R¹, R², R³ und R⁴, n und N die zuvor beschriebenen Bedeutungen haben,
R⁵ und R⁶ unabhängig voneinander C₁-C₄-Alkyl oder Halogen bedeuten,
q für 0, 1 oder 2 steht und
Y C₁-C₇-Alkyliden, C₁-C₇-Alkylen, C₅-C₁₂-Cycloalkylen, C₅-C₁₂-Cycloalkyliden, -O-, -S-, -SO-, -SO₂- oder -CO- bedeutet.

15. Formmassen nach einem der vorhergehenden Ansprüchen welche bis zu 35 Gew.%, bezogen auf die Gesamtformmasse, wenigstens eines Flammschutzmittels verschieden von Komponente D enthalten.

16. Formmassen gemäß einem der vorhergehenden Ansprüche, enthaltend eine feinstteilige Verbindung der 1. bis 5. Hauptgruppe oder der 1. bis 8. Nebengruppe des Periodensystems mit mindestens einem Element ausgewählt aus der Gruppe bestehend aus Sauerstoff, Schwefel, Bor, Kohlenstoff, Phosphor, Stickstoff, Wasserstoff und Silicium.

17. Verwendung der Formmassen nach einem der vorhergehenden Ansprüche zur Herstellung von Formkörpern.

18. Formkörper, herstellbar aus Formmassen nach einem der Ansprüche 1 bis 16.

## Claims

1. Thermoplastic moulding compositions comprising
A. 40 to 99 parts by wt. of a thermoplastic polycarbonate and/or polyester-carbonate,
B. 0.5 to 60 parts by wt. graft polymer, prepared by means of bulk, solution or bulk-suspension polymerization processes, of
B.1 50 to 99 wt.% of one or more vinyl monomers on
B.2 50 to 1 wt.% of one or more graft bases with a glass transition temperature of < 10°C,
C. 0 to 45 parts by wt. thermoplastic vinyl copolymer and/or polyalkylene terephthalate,
D. 0.5 to 20 parts by wt. of a phosphorus compound of the formula (I) 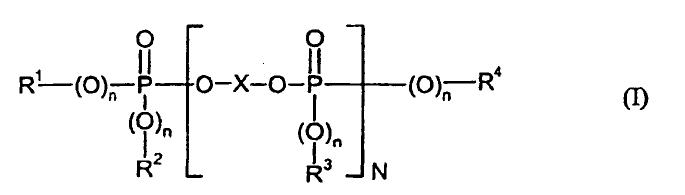 wherein
R¹, R², R³ and R⁴ independently of one another each denote optionally halogenated C₁- to C₈-alkyl, or C₅- to C₆-cycloalkyl, C₆- to C₂₀-aryl or C₇- to C₁₂-aralkyl, in each case optionally substituted by halogen and/or alkyl,
n independently of one another denote 0 or 1
N denotes 0 to 30 and
X denotes a mono- or polynuclear aromatic radical having 6 to 30 C atoms,
E. 0.05 to 5 parts by wt. fluorinated polyolefin in a form chosen from the group consisting of
E.1 coagulated mixture, comprising phenolic antioxidants, of a graft polymer B and tetrafluoroethylene polymer and
E.2 pulverulent tetrafluoroethylene polymers with an average particle diameter of 100 to 1,000 µm,
F. at least one additive chosen from the group consisting of lubricants and mould release agents, nucleating agents, antistatics, stabilizers, dyestuffs and pigments, flow auxiliaries, very finely divided inorganic powders with an average particle diameter of less than or equal to 200 nm and flameproofing agents, and
G. optionally a graft polymer prepared in the emulsion process.

2. Moulding compositions according to claim 1, which comprise 60 to 98.5 parts by wt. aromatic polycarbonate and/or polyester-carbonate.

3. Moulding compositions according to claims 1 and 2, which comprise 1 to 40 parts by wt. component B and 0 to 30 parts by wt. component C.

4. Moulding compositions according to claims 1 to 3, which comprise 1 to 18 parts by wt. phosphorus compound according to formula (I).

5. Moulding compositions according to claim 4, which comprise 8.5 to 17 parts by wt. phosphorus compound according to formula (I).

6. Moulding compositions according to claim 1, wherein the rubber content of component B is 5 wt.% to 25 wt.%.

7. Moulding compositions according to the preceding claims, wherein vinyl monomers B.1 are mixtures of
B.1.1 styrene, α-methylstyrene, styrenes substituted on the nucleus by halogen or alkyl and/or (meth)acrylic acid C₁-C₈-alkyl esters and
B.1.2 unsaturated nitriles, (meth)acrylic acid C₁-C₈-alkyl esters and/or derivatives of unsaturated carboxylic acids.

8. Moulding compositions according to the preceding claims, wherein graft base B.2 is chosen from at least one rubber from the group consisting of diene rubbers, EP(D)M rubbers and acrylate, polyurethane, silicone, chloroprene and ethylene/vinyl acetate rubber.

9. Moulding compositions according to one of the preceding claims, which comprise as component B bulk graft polymers and emulsion graft polymers.

10. Moulding compositions according to one of the preceding claims, which comprise as component D 10 to 90 wt.% of at least one monophosphate compound of the formula (I) and 90 to 10 wt.% (in each case based on the total amount of the phosphorus compounds) of at least one oligophosphorus compound of the formula (I).

11. Moulding compositions according to one of the preceding claims, wherein in formula (I) N has an average value of 0.3 to 20.

12. Moulding compositions according to one of the preceding claims, which comprise as the monophosphorus compound of the formula (I) tributyl phosphate, tris-(2-chloroethyl) phosphate, tris-(2,3-dibromopropyl) phosphate, triphenyl phosphate, tricresyl phosphate, diphenyl cresyl phosphate, diphenyl octyl phosphate, diphenyl 2-ethylcresyl phosphate, tri-(isopropylphenyl) phosphate, halogen-substituted aryl phosphates, methylphosphonic acid dimethyl ester, methylphosphonic acid diphenyl ester, phenylphosphonic acid diethyl ester, triphenylphosphine oxide and/or tricresylphosphine oxide.

13. Moulding compositions according to one of the preceding claims, which comprise as component D m-phenylene-bis(diphenyl phosphate).

14. Moulding compositions according to one of the preceding claims, which comprise as component D a phosphorus compound of the formula (Ia) 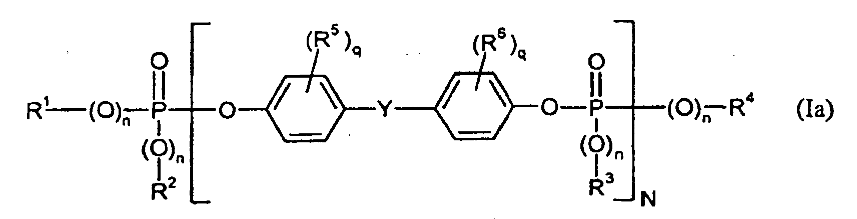 wherein
R¹, R², R³ and R⁴, n and N have the meanings described above,
R⁵ and R⁶ independently of one another denote C₁-C₄ or halogen,
q represents 0, 1 or 2 and
Y denotes C₁-C₇-alkylidene, C₁-C₇-alkylene, C₅-C₁₂-cycloalkylene, C₅-C₁₂-cycloalkylidene, -O- , -S-, -SO-, -SO₂- or -CO-.

15. Moulding compositions according to one of the preceding claims, which comprise up to 35 wt.%, based on the total moulding composition, of at least one flameproofing agent which differs from component D.

16. Moulding compositions according to one of the preceding claims, comprising a very finely divided compound of main groups 1 to 5 or sub-groups 1 to 8 of the periodic table with at least one element chosen from the group consisting of oxygen, sulphur, boron, carbon, phosphorus, nitrogen, hydrogen and silicon.

17. Use of the moulding compositions according to one of the preceding claims for the production of shaped articles.

18. Shaped articles which can be produced from moulding compositions according to one of claims 1 to 16.

## Revendications

1. Matières moulables thermoplastiques constituées de
A. 40 à 99 parties en poids d'un polycarbonate et/ou d'un polyestercarbonate thermoplastique,
B. 0,5 à 60 parties en poids d'un polymère greffé produit par polymérisation en masse, en solution ou en suspension en masse de
B.1. 50 à 99 % en poids d'un ou de plusieurs monomères de vinyle sur
B.2. 50 à 1 % en poids d'une ou de plusieurs bases de greffage possédant une température de transition vitreuse < 10 °C,
C. 0 à 45 parties en poids d'un copolymère de vinyle thermoplastique et/ou de polyalkylènetéréphtale,
D. 0,5 à 20 parties en poids d'un composé de phosphore de la formule (I) 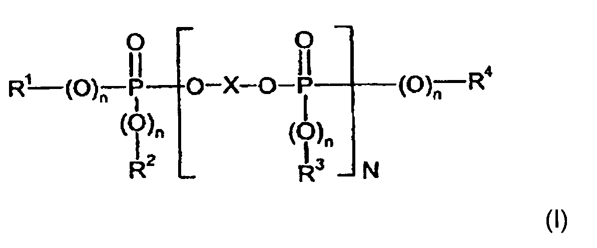 dans laquelle
R¹, R², R³ et R⁴ représentent, indépendamment les uns des autres, un alkyle en C₁ à C₈ chaque fois le cas échéant halogéné, un cycloalkyle en C₅ à C₆, un aryle en C₆ à C₂₀ ou un aralkyle en C₇ à C₁₂ chaque fois le cas échéant substitué par un halogène et/ou un alkyle;
les n correspondent indépendamment les uns des autres à 0 ou à 1,
N équivaut à un nombre compris entre 0 et 30 et
X est un groupe mononucléaire ou polynucléaire aromatique comportant 6 à 30 atomes de C,
E. 0,05 à 5 parties en poids de polyoléfine fluorée sous une forme sélectionnée parmi le groupe formé de
E.1. mélange coagulé contenant des antioxydants phénoliques d'un polymère greffé B et d'un polymère de tétrafluoréthylène et de
E.2. polymères de tétrafluoréthylène pulvérulents possédant un diamètre de particule moyen compris entre 100 et 1000 µm,
F. au moins un additif sélectionné parmi le groupe formé des agents de lubrification et de démoulage, des agents de nucléation, des antistatiques, des stabilisants, des colorants et des pigments, des adjuvants d'écoulement, des poudres inorganiques ultrafines présentant un diamètre de particule moyen égal ou inférieur à 200 nm et des agents pare-flammes, et
G. Le cas échéant, un polymère greffé produit par le procédé en émulsion.

2. Matières moulables selon la revendication 1, qui contiennent 60 à 98,5 parties en poids de polycarbonate et/ou de polyestercarbonate aromatique.

3. Matières moulables selon les revendications 1 et 2, qui contiennent 1 à 40 parties en poids du composant B et 0 à 30 parties en poids du composant C.

4. Matières moulables selon les revendications 1 à 3, qui contiennent 1 à 18 parties en poids du composé de phosphore selon la formule (I).

5. Matières moulables selon la revendication 4, qui contiennent 8,5 à 17 parties en poids du composé de phosphore selon la formule (I).

6. Matières moulables selon la revendication 1, dans lesquelles la teneur en caoutchouc du composant B est comprise entre 5 et 25 % en poids.

7. Matières moulables selon les revendications précédentes, dans lesquelles les monomères de vinyle B.1 représentent des mélanges de
B.1.1 styrène, α-méthylstyrène, styrènes substitués sur le noyau par halogène ou alkyle et/ou esters alkyliques en C₁-C₈ de l'acide (méth)acrylique et
B.1.2 nitriles insaturés, esters alkyliques en C₁-C₈ de l'acide (méth)acrylique et/ou dérivés d'acides carboxyliques insaturés.

8. Matières moulables selon les revendications précédentes, dans lesquelles la base de greffage B.2 est sélectionnée parmi au moins un caoutchouc faisant partie du groupe des caoutchoucs diéniques, des caoutchoucs EP(D)M, ainsi que des caoutchoucs acrylate, polyuréthane, silicone, chloroprène et éthylène/acétate de vinyle.

9. Matières moulables selon une des revendications précédentes, qui contiennent comme composant B, des polymères greffés en masse et des polymères greffés en émulsion.

10. Matières moulables selon une des revendications précédentés, qui contiennent comme composant D, 10 à 90 % en poids d'au moins un composé de monophosphate de la formule (I) et 90 à 10 % en poids (dans chaque cas rapport à la proportion totale des composés de phosphore) d'au moins un composé d'oligophosphore de la formule (I).

11. Matières moulables selon une des revendications précédentes, dans lesquelles N dans la formule (I) possède une valeur moyenne comprise entre 0,3 et 20.

12. Matières moulables selon une des revendications précédentes, qui contiennent comme composé de monophosphore de la formule (I), du tributylphosphate, du tris-(2-chloréthyl)-phosphate, du tris-(2,3-dibromopropyl)-phosphate, du triphénylphosphate, du tricrésylphosphate, du diphénylcrésylphosphate, du diphényloctylphosphate, du diphényl-2-éthylcrésylphosphate, du tri-(isopropylphényl)-phosphate, des arylphosphates substitués par un/des halogènes, de l'ester diméthylique de l'acide méthylphosphonique, de l'ester diphénylique de l'acide méthylphosphonique, de l'ester diéthylique de l'acide phénylphosphonique, de l'oxyde de triphénylphosphine et/ou de l'oxyde de tricrésylphosphine.

13. Matières moulables selon une des revendications précédentes, qui contiennent comme composant D, du m-phénylène-bis(diphénylphosphate).

14. Matières moulables selon une des revendications précédentes, qui contiennent comme composant D, un composé de phosphore de la formule (la), 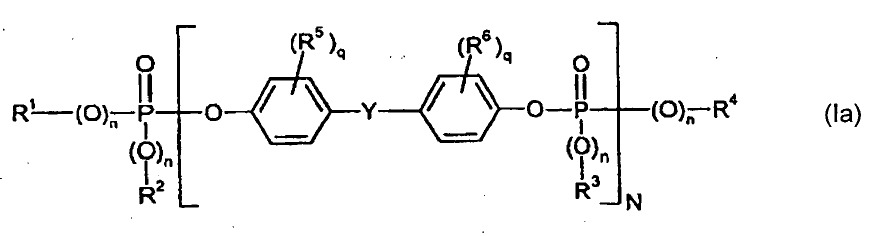 dans laquelle
R¹, R², R³ et R⁴ n et N possèdent les significations décrites précédemment,
R⁵ et R⁶ représentent, indépendamment l'un de l'autre, un alkyle en C₁ à C₄ ou un halogène,
les q équivalent à 0, 1 ou 2 et
Y est un alkylidène en C₁ à C₇, un alkylène en C₁ à C₇, un cycloalkylène en C₅ à C₁₂, un cycloalkylidène en C₅ à C₁₂, -O-, -S-, -SO-, SO₂- ou -CO-.

15. Matières moulables selon une des revendications précédentes, qui contiennent jusqu'à 35 % en poids, par rapport à la totalité de la matière moulable, d'au moins un agent pare-flamme différent du composant D.

16. Matières moulables selon une des revendications précédentes, contenant un composé ultrafin des groupes principaux 1 à 5 ou des groupes secondaires 1 à 8 du système périodique avec au moins un élément sélectionné parmi le groupe formé par l'oxygène, le soufre, le bore, le carbone, le phosphore, le carbone, l'azote, l'hydrogène et le silicium.

17. Utilisation des matières moulables selon une des revendications précédentes pour la production de pièces moulées.

18. Pièces moulées pouvant être produites à partir des matières moulables selon une des revendications 1 à 16.
